# EUROPEAN PATENT SPECIFICATION

(11) **EP 2 113 140 B1**
(45) Date of publication and mention of the grant of the patent: **17.07.2013**
(21) Application number: 08724017.2
(22) Date of filing: 14.02.2008
(51) Int. Cl.: H02J 3/18

(54) **FLUX CONTROL SYSTEM FOR ACTIVE VOLTAGE CONDITIONING**
FLUSSSTEUERUNGSSYSTEM FÜR AKTIVE SPANNUNGSKONDITIONIERUNG
SYSTÈME DE CONTRÔLE DE FLUX POUR UN CONDITIONNEMENT DE TENSION ACTIVE

(30) Priority: 20.02.2007 US 890669 P
(43) Date of publication of application: 04.11.2009
(73) Proprietor: ABB Limited, Grafton, Auckland (NZ)
(72) Inventor: WALTON, Simon, James, Napier 4112 (NZ)
(74) Representative: ABB Patent Attorneys
(86) International application number: PCT/NZ2008/000027
(87) International publication number: WO 2008/103059

(56) References cited:
- EP-A- 0 476 618
- WO-A-2006/064742
- WO-A1-99/39420
- US-A- 4 896 092
- US-A- 5 610 501
- US-A- 5 854 743
- US-A1- 2005 071 050
- US-B1- 6 327 162
- US-B1- 6 327 162
- PRAVEEN J ET AL: "Review of dynamic voltage restorer for power quality improvement" INDUSTRIAL ELECTRONICS SOCIETY, 2004. IECON 2004. 30TH ANNUAL CONFEREN CE OF IEEE BUSAN, SOUTH KOREA 2-6 NOV. 2004, PISCATAWAY, NJ, USA,IEEE, vol. 1, 2 November 2004 (2004-11-02), pages 749-754, XP010799737 ISBN: 978-0-7803-8730-0
- CAVINI A ET AL: "Shunt active filters controller with new saturation strategy" INDUSTRIAL ELECTRONICS SOCIETY, 2004. IECON 2004. 30TH ANNUAL CONFEREN CE OF IEEE BUSAN, SOUTH KOREA 2-6 NOV. 2004, PISCATAWAY, NJ, USA,IEEE, vol. 1, 2 November 2004 (2004-11-02), pages 546-551, XP010799655 ISBN: 978-0-7803-8730-0

## Description

### FIELD OF THE INVENTION

The present invention relates to active voltage conditioning of a three-phase mains supply.

### BACKGROUND TO THE INVENTION

Disturbance in utility and mains supply voltages is a major problem for industrial and commercial users that depend on electronic equipment for factory and office automation. Voltage sags have been identified as being one of the most commonly occurring disturbances. Mains voltage sags of sufficient magnitude can cause electrical or electronic equipment to malfunction or shut down, which can be very costly, especially in continuous process applications. One known solution to this problem is to install onsite active voltage conditioning units that are arranged to detect voltage disturbances or sags in the supply and inject a corrective voltage into the supply to compensate and ensure reliability.

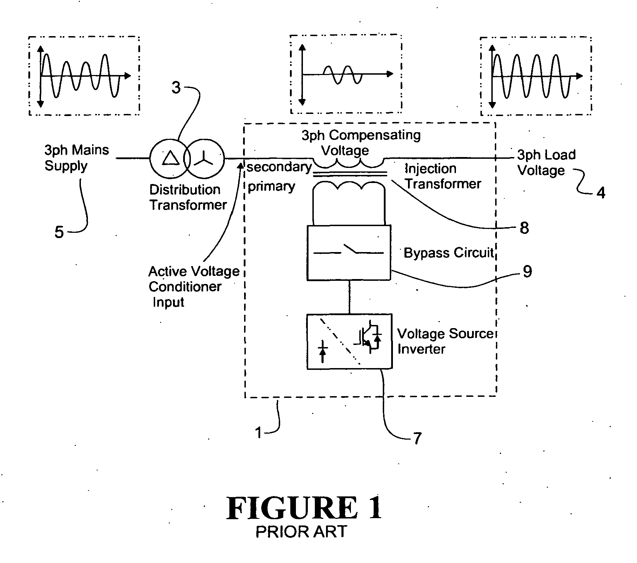

A typical active voltage conditioner configuration is shown in Figure 1. The active voltage conditioner 1 is connected to the output of a local distribution transformer 3 that distributes a three-phase mains supply 5. The active voltage conditioner 1 comprises a three-phase voltage source inverter 7, bypass circuit 9, and an injection transformer 8 connected in a series between the incoming main supply from the distribution transformer 3 and the load 4. A control system of the active voltage conditioner monitors the incoming supply voltage and when it deviates from the nominal voltage level it inserts an appropriate compensating voltage using the inverter 7 and series injection transformer 8 thereby regulating the load voltage 4 to the nominal value, thus eliminating voltage disturbances from the mains supply affecting the load. Energy for the compensating voltage is sourced from a three-phase rectifier connected to the input supply, directly or via a transformer or autotransformer, and which can supply or remove power from the inverter 7 as required. The rectifier controls power flow in and out of the input supply from the distribution transformer 3 in such a way as to hold the inverter 7 input direct current (DC) bus supply at a constant value. In this way, the system automatically acts to provide energy balance drawing extra power from the input supply when required or supplying it back to the input supply if the voltage correction results in excess regenerated energy.

The control system typically utilises a digital signal processor (DSP) microprocessor-based system that is arranged to calculate any vectorial voltage differences from a perfect balanced and regulated three-phase supply, and then uses these differences to calculate and create appropriate pulse width modulated (PWM) waveforms to control the inverter 7 to insert an appropriate compensating voltage in both phase and magnitude on individual phases via the serious injection transformer 8. In particular, the DSP is typically arranged to sample the incoming mains supply and calculate the correction or compensation voltage to be applied through the injection transformer 8 to restore the output to a regulated, balanced three phase sinusoidal supply, or as close as possible to this within the correction capabilities of the system. Typically, the three phase voltages of the mains supply are measured in real time and then transformed into the stationary reference frame where they are represented as alpha and beta terms. This is an application of standard vector control principals well known in the art. The DSP then calculates the alpha and beta voltage compensation terms, Va and Vb, necessary to bring the utility supply back to the set nominal level. The DSP then utilises Va and Vb to generate the PWM waveforms for controlling the inverter 7 to generate and apply the appropriate compensation voltage(s) to the primary terminals of the injection transformer 8.

Various similar active voltage conditioning configurations are proposed and described in US patents 5,319,534, 5,610,501 and 6,327,162. All these configurations also utilise the inverter fed injection transformer topology for regulating the supply voltage to a load.

During operation of such active voltage conditioners, when step or sudden changes are made to the voltage of the primary of the injection transformer, the transformer core flux adjusts in proportion to the applied voltage and there is also normally a flux offset present. Subsequent changes in voltage will add and subtract from this flux offset and this can make the peak core flux levels larger or smaller depending on the phase and magnitude of the voltage changes. Therefore, there is a risk of core magnetic saturation which results in very high inverter currents and possible loss of system control. This problem reduces the reliability and effectiveness of the active voltage conditioner.

In this specification where reference has been made to patent specifications, other external documents, or other sources of information, this is generally for the purpose of providing a context for discussing the features of the invention. Unless specifically stated otherwise, reference to such external documents is not to be construed as an admission that such documents, or such sources of information, in any jurisdiction, are prior art, or form part of the common general knowledge in the art.

It is an object of the present invention to provide a flux control system for reducing the risk of core magnetic saturation in the injection transformer of active voltage conditioners, or at least to provide the public with a useful choice.

### SUMMARY OF THE INVENTION

In a first aspect, the present invention broadly consists in a flux control system for a three-phase active voltage conditioner that utilises an injection transformer to apply calculated compensation voltage(s), one for each phase, to a mains supply, the flux control system being arranged to modify the compensation voltage(s) to be applied to the primary terminals of the injection transformer so as to avoid magnetic saturation of the injection transformer and comprising:
a magnetic flux model module or modules that are arranged to calculate the core flux level(s) of the injection transformer based on the compensation voltage(s) and an intrinsic time constant term specific to the injection transformer;
a flux offset module or modules that are arranged to apply a first modification to the compensation voltage(s) based on the core flux level(s) calculated by the flux model module or modules and an extrinsic time constant term calculated to gradually reduce any flux offset(s) in the injection transformer; and
a peak flux module or modules that are arranged to apply a second modification to the compensation voltage(s) to prevent the core flux level(s) from moving outside a preset range.

Preferably, the or each magnetic flux model module comprises an integrator that is arranged to integrate the compensation voltage(s) and output core flux level(s), the core flux level(s) being fed back into the input of the integrator via a negative feedback loop comprising an amplifier that is arranged to amplify the core flux level(s) by the intrinsic time constant term.

Preferably, the or each flux offset module is arranged to feed the calculated core flux level(s) back into the compensation voltage(s) via a negative feedback loop comprising an amplifier that is arranged to amplify the core flux level(s) by the extrinsic time constant term.

Preferably, the or each peak flux module comprises: a dead zone modifier that is arranged to generate a limiter term of substantially zero if the calculated core flux level(s) lie within the range defined between 0 and a preset positive flux threshold or alternatively a non-zero limiter term the magnitude of which is dependent on the amount by which the calculated core flux level(s) lie outside the range; and an amplifier that is arranged to amplify the hmiter term by a preset scalar and output the amplifier limiter term, the peak flux module being arranged to fed the core flux level(s) back into the compensation voltage(s) via a negative feedback loop comprising a multiplier that is arranged to multiply core flux level(s) by the amplified limiter term.

In one form, the three-phase compensation voltages and flux level(s) are represented collectively in the stationary reference frame. Preferably, for a three wire three phase system, the compensation voltages and flux level(s) are represented in the stationary reference frame in Cartesian co-ordinates as alpha and beta terms, or alternatively as polar co-ordinates. In an alternative form the voltage compensation and flux level terms may be described in terms of a rotating reference frame (DQ representation). In another alternative form, the three-phase compensation voltages and flux level(s) may be represented individually in the time domain using phase quantities or other non-orthogonal axes.

In a second aspect, the present invention broadly consists in a method of controlling the core flux level(s) of an injection transformer to avoid magnetic saturation in a three-phase active voltage conditioner that utilises the injection transformer to apply calculated compensation voltage(s), one for each phase, to a mains supply, comprising the steps of:
receiving the compensation voltage(s);
calculating the injection transformer core flux level(s) based on the compensation voltage(s) and an intrinsic time constant term specific to the injection transformer;
applying a first modification to the compensation voltage(s) based on the calculated core flux level(s) and an extrinsic time constant term calculated to gradually reduce any flux offset(s) in the injection transformer; and
applying a second modification to the compensation voltage(s) to prevent the core flux level(s) from moving outside a preset range.

Preferably, the step of calculating the injection transformer core flux level(s) comprises the steps of: integrating the compensation voltage(s) to generate core flux level(s); amplifying the core flux level(s) by the intrinsic time constant term; and feeding back the amplified core flux level(s) into the compensation voltage(s) via a negative feedback loop.

Preferably, the step of applying a first modification to the compensation voltage(s) comprises the steps of: amplifying the calculated core flux level(s) by the extrinsic time constant term; and feeding back the amplified core flux level(s) into the compensation voltage(s) via a negative feedback loop.

Preferably, the step of applying a second modification to the compensation voltage(s) comprises the steps of: generating a limiter term of substantially zero if the calculated core flux level(s) lie within the range defined between 0 and a preset positive flux threshold or alternatively a non-zero limiter term the magnitude of which is dependent on the amount by which the calculated core flux level(s) lie outside the range; amplifying the limiter term by a preset scalar; multiplying the calculated core flux level(s) by the amplified limiter term; and feeding back the multiplied core flux level(s) into the compensation voltage(s) via a negative feedback loop.

In one form, the three-phase compensation voltages and flux level(s) are represented collectively in the stationary reference frame. Preferably, for a three wire three phase system, the compensation voltages and flux level(s) are represented in the stationary reference frame in cartesian co-ordinates as alpha and beta terms, or alternatively as polar co-ordinates. In an alternative form the voltage compensation and flux level terms may be described in terms of a rotating reference frame (DQ representation). In another alternative form, the three-phase compensation voltages and flux level(s) may be represented individually in the time domain using phase quantities or other non-orthogonal axes.

In a third aspect, the present invention broadly consists in a flux control system for a three-phase active voltage conditioner that utilises an injection transformer to apply compensation voltage to a mains supply based on alpha and beta voltage compensation terms calculated in the stationary reference frame, the flux control system being arranged to modify the alpha and beta terms to avoid magnetic saturation of the injection transformer and comprising:
alpha and beta flux control subsystems that are arranged to receive the alpha and beta voltage compensation terms respectively and output modified compensation terms, each subsystem comprising:
   a flux model module that is arranged to generate an alpha or beta flux term based on the alpha or beta voltage compensation term and an intrinsic time constant term specific to the injection transformer; and
   a flux offset module that is arranged to apply a first modification to the alpha or beta voltage compensation term based on the alpha or beta flux term generated by the flux model module and an extrinsic time constant term calculated to gradually reduce any flux offset in the injection transformer; and
a peak flux limiter that is arranged to calculate a peak flux level representation for the injection transformer based on the alpha and beta flux terms from the alpha and beta flux control subsystems and generate a limiter term based on a comparison of the calculated peak flux level representation to a preset positive flux threshold, the alpha and beta flux control subsystems each further comprising:
   a peak flux module that is arranged to apply a second modification to the alpha or beta voltage compensation term based on the alpha or beta flux term generated by the flux model module and the limiter term generated by the peak flux limiter to prevent the peak flux level representation in the injection transformer from exceeding the preset positive flux threshold.

Preferably, each flux model module comprises an integrator that is arranged to integrate the alpha or beta voltage compensation term and output an alpha or beta flux term, the alpha or beta flux term being fed back into the input of the integrator via a negative feedback loop comprising an amplifier that is arranged to amplify the alpha or beta flux term by the intrinsic time constant term.

Preferably, each flux offset module is arranged to fed the alpha or beta flux term back into the alpha or beta voltage compensation term via a negative feedback loop comprising an amplifier that is arranged to amplify the alpha or beta flux term by the extrinsic time constant term.

Preferably, the peak flux limiter comprises: a peak flux level module that is arranged to calculate a peak flux level representation for the injection transformer based on the alpha and beta flux terms from the alpha and beta flux control subsystems; a dead zone modifier that receives the calculated peak flux level representation and that is arranged to generate a limiter term of substantially zero if the peak flux level representation lies within the range between 0 and the preset positive flux threshold or alternatively a non-zero limiter term the magnitude of which is dependent on the amount by which the calculated peak flux level representation exceeds the positive flux threshold; and an amplifier that is arranged to amplify the limiter term by a preset scalar and output the amplifier limiter term.

Preferably, each peak flux module is arranged to fed the alpha or beta flux term back into the alpha or beta voltage compensation term via a negative feedback loop comprising a multiplier that is arranged to multiply the alpha or beta flux term by the amplified limiter term from the peak flux limiter.

In a fourth aspect, the present invention broadly consists in a method of controlling the core flux of an injection transformer to avoid magnetic saturation in a three-phase active voltage conditioner that utilises the injection transformer to apply compensation voltage to a mains supply based on alpha and beta voltage compensation terms calculated in the stationary reference frame, comprising the steps of:
receiving the alpha and beta voltage compensation terms;
modelling the injection transformer flux and generating alpha and beta flux terms based on the alpha and beta voltage compensation terms respectively and an intrinsic time constant term specific to the injection transformer;
applying a first modification to the alpha and beta voltage compensation terms based on the alpha and beta flux terms generated respectively and an extrinsic time constant term calculated to gradually reduce any flux offset in the injection transformer;
calculating a peak flux level representation in the injection transformer based on the alpha and beta flux terms and generating a limiter term based on a comparison of the calculated peak flux level representation to a preset positive flux threshold; and
applying a second modification to the alpha and beta voltage compensation terms based on the alpha and beta flux terms generated respectively and the limiter term generated to prevent the peak flux level representation in the injection transformer from exceeding the preset positive flux threshold.

Preferably, the step of modelling the injection transformer flux and generating alpha and beta flux terms comprises the steps of: integrating the alpha and beta voltage compensation terms to generate respective alpha and beta flux terms; amplifying the alpha and beta flux terms by the intrinsic time constant term; and feeding back the amplified alpha and beta flux terms into their respective alpha and beta voltage compensation terms via a negative feedback loop.

Preferably, the step of applying a first modification to the alpha and beta voltage compensation terms comprises the steps of: amplifying the alpha and beta flux terms by the extrinsic time constant term; and feeding back the amplified alpha and beta flux terms into their respective alpha and beta voltage compensation terms via a negative feedback loop.

Preferably, the step of generating a limiter term based on a comparison of the calculated peak flux level representation to the preset positive flux threshold comprises the steps of: generating a limiter term of substantially zero if the calculated peak flux level representation lies within the range between 0 and the preset positive flux threshold or alternatively a non-zero limiter term the magnitude of which is dependent on the amount by which the calculated peak flux level representation exceeds the positive flux threshold; and amplifying the limiter term by a preset scalar.

Preferably, the step of applying a second modification to the alpha and beta voltage compensation terms comprises the steps of: multiplying the alpha and beta flux terms by the amplified limiter term; and feeding back the multiplied alpha and beta flux terms into their respective alpha and beta voltage compensation terms via a negative feedback loop.

In a fifth aspect, the present invention broadly consists in a computer program or computer software that comprises computer instructions for carrying out the system or method steps described in respect of any one of the first-fourth aspects of the invention.

The following features may apply to any one or more of the first-fifth aspects of the invention described above.

By way of example, the active voltage conditioner is for conditioning a three-phase mains supply. Preferably, the primary terminals of the injection transformer are connected, directly or indirectly, to the output of a three-phase inverter. More preferably, the calculated compensation voltage(s) or the alpha and beta voltage compensation terms calculated in the stationary reference frame are utilised to generate corresponding pulse width modulated (PWM) signals for driving the inverter to generate the appropriate compensating voltages for applying to the primary terminals of the injection transformer.

Preferably, the active voltage conditioner is online in that it continuously monitors the mains supply voltage and continuously applies compensating voltage via the injection transformer to regulate the voltage supply.

By way of the example, the flux control system may be a subsystem of the overall control system of the active voltage conditioner or may alternatively be a separate control module. It will be appreciated that the flux control system and associated method may be implemented in hardware, software or a combination thereof. By way of example, the flux control system and associated method may be implemented in computer software for a microprocessor, microcontroller, or any other programmable device.

The terms "alpha" and "beta" are intended to represent cartesian co-ordinates of three-phase characteristics, such as voltage and flux levels, in the stationary reference frame.

The term "comprising" as used in this specification and claims means "consisting at least in part of". When interpreting each statement in this specification and claims that includes the term "comprising", features other than that or those prefaced by the term may also be present. Related terms such as "comprise" and "comprises" are to be interpreted in the same manner.

The invention consists in the foregoing and also envisages constructions of which the following gives examples only.

### BRIEF DESCRIPTION OF THE DRAWINGS

A preferred embodiment of the invention will be described by way of example only and with reference to the drawings, in which:
Figure 1 is a schematic diagram of a known active voltage conditioner configuration for regulating a three-phase mains supply;
Figure 2 is a schematic diagram of a preferred form flux control system of the invention, and more specifically showing alpha and beta flux control subsystems and a peak flux limiter;
Figure 3 shows a schematic diagram of the alpha flux control subsystem of the flux control system; and
Figure 4 shows a schematic diagram of the peak flux limiter of the flux control system.

### DETAILED DESCRIPTION OF A PREFERRED EMBODIMENT

The preferred form flux control system and associated method is for online three-phase active voltage conditioners that utilise an injection transformer to apply compensation voltage to a mains supply in a manner previously described. In particular, the flux control system is employed to modify the calculated correction or compensation voltages to be applied to the primary terminals of the injection transformer so as to achieve optimal performance in regulating the mains supply but also ensuring that the core flux of the injection transformer is controlled and limited so as to avoid magnetic saturation during operation that may lead to loss of system control and unreliable voltage conditioning.

Briefly, the preferred form flux control system is arranged to continuously predict or estimate the magnitude and angular position of the magnetic flux of the core of the injection transformer based on the calculated compensation voltage to be applied to the primary terminals of the transformer. The flux control system then modifies the magnitude and phase of the calculated compensation voltage, based on the predicted magnitude and angular position of the flux, so as to maximise the application of applied voltage without exceeding a maximum preset flux level or magnitude that will cause magnetic saturation of the transformer of the core.

As described, the control system of an active voltage conditioner typically calculates, in the stationary reference frame, alpha and beta voltage compensation terms, Va and Vb, necessary to bring the three-phase mains supply back to the set nominal level. The control system then utilises Va and Vb to generate PWM waveforms for controlling a three-phase inverter to generate and apply appropriate compensation voltage(s) to the primary terminals of the injection transformer to correct or regulate each of the individual phases.

Briefly, the preferred form flux control system operates as a subsystem of the control system of the active voltage conditioner and is arranged to model, predict or calculate the core flux levels of the injection transformer based on Va and Vb, and also an intrinsic characteristic(s), such as an intrinsic time constant term, specific to the injection transformer. The flux control system then applies a first modification to Va and Vb to gradually reduce any flux offset in the core of the injection transformer and, if necessary, a second modification to Va and Vb to ensure the peak core flux level remains below a predetermined positive threshold. The modified alpha and beta voltage compensation terms, Voa and Vob, are then utilised by the remainder of the control system to generate the PWM signals or waveforms for controlling the inverter to apply the appropriate compensation voltages to the primary terminals of the injection transformer for conditioning and regulating the mains supply without driving the injection transformer into magnetic saturation.

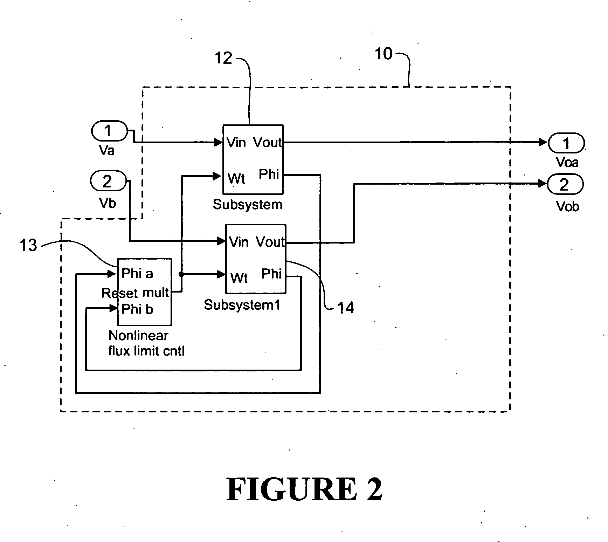

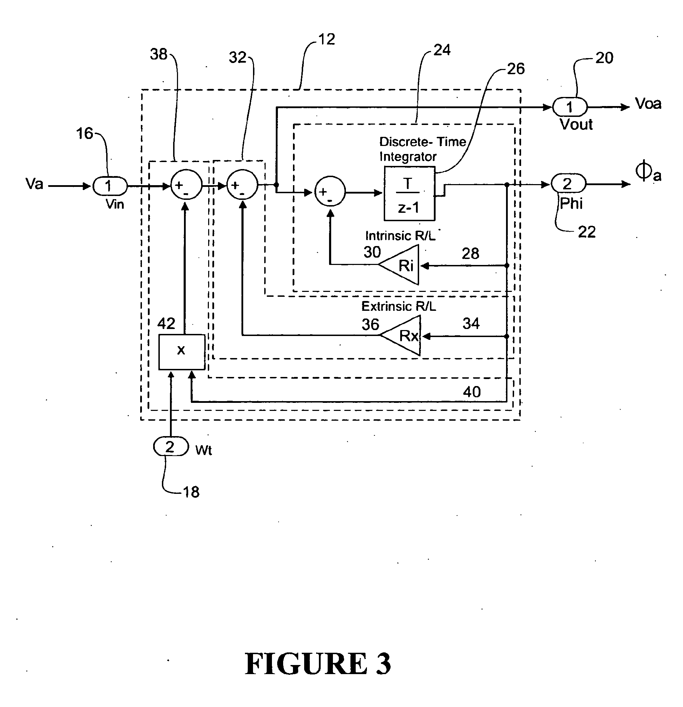

Referring to Figure 2, the preferred form flux control system 10 receives the alpha and beta voltage compensation terms, Va and Vb, as inputs and outputs the modified alpha and beta voltage compensation terms, Voa and Vob. Va and Vb are independently modified by separate alpha 12 and beta 14 flux control subsystems of the flux control system 10. The alpha 12 and beta 14 flux control subsystems are identical in configuration and by way of example Figure 3 shows the alpha flux control subsystem 12 that will be described in more detail below.

The alpha flux control subsystem 12 receives Va and a limiter term Wt from a peak flux limiter 13 of the flux control system at its input ports 16 and 18 respectively and outputs Voa and an alpha flux term φa at its output ports 20 and 22 respectively. The alpha flux control subsystem 12 comprises a flux model module 24 that is arranged to generate the alpha flux term φa based on the alpha voltage compensation term Va and an intrinsic time constant term specific to the injection transformer characteristics. In particular, the flux model module 24 comprises an integrator 26 that is arranged to integrate Va and output φa. Further, the flux model module 24 is arranged to feed φa back into the input of the integrator 26 via negative feedback loop 28 that comprises an amplifier 30 that is arranged to amplify φa by an intrinsic time constant term Ri. In the preferred form, the intrinsic time constant term Ri is selected based on the characteristics of the injection transformer and in particular represents the actual transformer resistance R over magnitising inductance L. The integrator 26 may, for example, be a discrete-time integrator modelled in the Z domain or any other integration module could alternatively be utilised if desired.

The alpha flux control subsystem 12 also comprises a flux offset module 32 that is arranged to apply a first modification to Va based on φa generated by the flux model module 24 and an extrinsic characteristic(s), such as an extrinsic time constant term Rx calculated to gradually reduce any flux offset in the injection transformer. In particular, the flux offset module 32 is arranged to feed φa back into Va via a negative feedback loop 34 that comprises an amplifier 36 that is arranged to amplify φa via the extrinsic time constant term Rx. In a preferred form, the extrinsic time constant term Rx does not model the actual injection transformer but instead produces a small voltage across the primary of the injection transformer of the correct phase and magnitude to reset any flux offset to substantially zero gradually over time. The intrinsic time constant term Ri of the flux model module 24 is adjusted to match the actual injection transformer characteristics whereas the extrinsic time constant term Rx of the flux offset module 32 is adjusted to reset any flux offset in a reasonable time without creating significant distortion in the compensating voltage output by the active voltage conditioner.

The alpha flux control system 12 also comprises a peak flux module 38 that is arranged to apply a second modification to Va based on φa generated by the flux model module 24 and a limiter term Wt generated by peak flux limiter 13 to prevent the peak flux level in the core of the injection transformer from exceeding a preset positive flux threshold. In particular, the peak flux module 38 is arranged to feed φa back into Va via a negative feedback loop 40 that comprises a multiplier 42 that is arranged to multiply φa by Wt from the peak flux limiter 13.

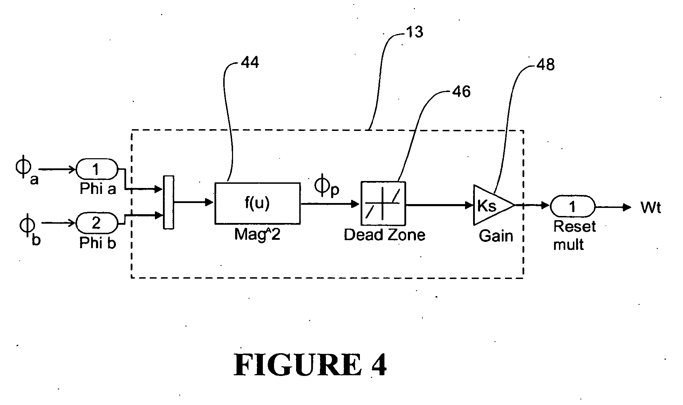

Referring to Figure 4, the peak flux limiter 13 of the flux control system will now be described in more detail. The peak flux limiter 13 receives φa and φb from the alpha 12 and beta 14 flux control subsystems as inputs. φa and φb represent the core flux levels of the injection transformer in the stationary reference frame. φa and φb are passed through a peak flux level module 44 that is arranged to calculate a value φp that represents or is a function of the peak flux level of the core of the injection transformer. In the preferred form, the value φp calculated by the module 44 is the square of the peak flux level of the core of the injection transformer. In particular, the module 44 is arranged to calculate the square of the magnitude or norm of the vector resulting from the φa and φb terms through conventional vectorial calculation. It will be appreciated that the vector magnitude or norm involves taking the square root of the sum of the squares of the orthogonal vector φa and φb terms. In alternative forms, the module 44 may be arranged to calculate and output a value φp that represents the vector norm or magnitude of the peak flux level itself. However, in the preferred form, it is less computationally intensive to use the square of the vector norm or magnitude of the peak flux level for φp as shown in Figure 4. This also has the benefit of emphasizing large excursions in flux magnitude. It will also be appreciated that any other non-negative non-linear function of the vector norm or magnitude could be calculated and output as the value φp if desired.

The output φp of the peak flux level module 44 is applied to a dead zone modifier 46 that is arranged to generate a limiter term of substantially zero if φp lies within the range defined between 0 and a preset positive flux threshold or alternatively a non-zero limiter term, the magnitude of which is dependent on the amount by which the φp lies outside the range, ie the amount by which it exceeds the positive flux threshold. In the preferred form, the limiter term increases linearly in accordance with the amount by which φp lies outside the range. The positive threshold is determined by the characteristics of the injection transformer and the peak flux levels beyond which magnetic saturation will occur. The limiter term is then amplified by a scaler Ks at amplifier 48 to generate the limiter term output Wt.

In summary, the flux control system operates in such a way that under normal steady-state operating conditions the flux of the injection transformer is modelled in real time and any flux offset is gradually reset to zero or close to it by applying suitable scaled and aligned voltage offsets (the first modification). Further, should a voltage compensation change be demanded that will cause the peak transformer flux to go above a level defined in the dead zone limit, offset voltages will be produced which limits the actual voltages generated by the inverter to prevent significant flux excursions (the second modification). In this way, the online active voltage conditioner will operate to produce the fastest voltage adjustments allowable without resultant problematic injection transformer magnetic saturation.

It will be appreciated that the flux control system may be implemented as a subsystem within the control system of an active voltage conditioner. In particular, the flux control system or algorithm(s) may be implemented as computer software or a computer program that runs on a microprocessor, microcontroller or other programmable device that is part of the control system. Alternatively, the flux control system may be in the form of an independent module embedded in hardware or the like and which co-operates with the control system.

The preferred form flux control system is performed in the stationary reference frame, using alpha and beta terms. Transformation between three-phase representation in the time domain and representation in the stationary reference frame as alpha and beta terms is well known in the art. The alpha and beta terms are cartesian co-ordinates in the stationary reference frame and it will be appreciated that the flux control system could alternatively be modified to operate in polar co-ordinates or in any other suitable format. Further, it will be appreciated that the flux control system may be implemented or performed in other domains. For example, it will be appreciated that the flux control system need not necessarily be implemented in the stationary reference frame and that it could be modified to operate in a rotating reference frame or using phase quantities or other non-orthogonal axes. In particular, it will be appreciated that for each individual phase, the flux control system may be arranged to: estimate the core flux level in the injection transformer based on the voltage to be applied to the primary terminals for that phase and an intrinsic time constant term specific to the transformer; modify the voltage to be applied based on the estimated flux level and an extrinsic time constant term to gradually reduce any flux offset to substantially zero; and modify the voltage to be applied to prevent peak flux levels from moving outside a preset range. In essence, the modelling of the flux levels in the core of the injection transformer and the modifications (flux offset modification and peak flux modification) to the voltages to be applied to the injection transformer for the three phases may be performed in any suitable domain and format, for example on a collective basis (stationary reference frame) or individually phase by phase.

The foregoing description of the invention includes preferred forms thereof. Modifications may be made thereto without departing from the scope of the invention as defined by the accompanying claims.

## Claims

1. A flux control system for a three-phase active voltage conditioner that utilises an injection transformer to apply calculated compensation voltage(s), one for each phase, to a mains supply, the flux control system being arranged to modify the compensation voltage(s) to be applied to the primary terminals of the injection transformer so as to avoid magnetic saturation of the injection transformer and comprising:
a magnetic flux model module or modules that are arranged to calculate the core flux level(s) of the injection transformer based on the compensation voltage(s) and an intrinsic time constant term specific to the injection transformer;
a flux offset module or modules that are arranged to apply a first modification to the compensation voltage(s) based on the core flux level(s) calculated by the flux model module or modules and an extrinsic time constant term calculated to gradually reduce any flux offset(s) in the injection transformer, whereby the step of applying the first modification to the compensation voltage(s) comprises the steps of: amplifying the calculated core flux level(s) by the extrinsic time constant term; and feeding back the amplified core flux level(s) into the compensation voltage(s) via a negative feedback loop;
a peak flux module or modules that ate arranged to apply a second modification to the compensation voltage(s) to prevent the core flux level(s) from moving outside a preset range, whereby the step of applying a second modification to the compensation voltage(s) comprises the steps of: generating a limiter term of substantially zero if the calculated core flux level(s) lie within the range defined between 0 and a preset positive flux threshold or alternatively a non-zero limited term the magnitude of which is dependent on the amount by which the calculated core flux level(s) lie outside the range; amplifying the limiter term by a preset scalar, multiplying the calculated core flux level(s) by the amplified limiter term; and feeding back the multiplied core flux level(s) into the compensation voltage(s) via a negative feedback loop; and
the or each magnetic flux model module comprises an integrator that is arranged to integrate the compensation voltage(s) and output core flux level(s), the core flux level(s) being fed back into the input of the integrator via a negative feedback loop comprising an amplifier that is arranged to amplify the core flux level(s) by the intrinsic time constant term, whereby the intrinsic time constant term represents the actual injection transformer resistance divided by the magnetizing inductance of the injection transformer.

2. A flux control system according to claim 1 wherein the integrator is a discreet-time integrator modeled in the Z domain.

3. A flux control system according to any one of the preceding claims wherein the or each flux offset module is arranged to fed the calculated core flux level(s) back into the compensation voltage(s) via a negative feedback loop comprising an amplifier that is arranged to amplify the core flux level(s) by the extrinsic time constant term.

4. A flux control system according to claim 3 wherein the extrinsic time constant term is calculated to produce a small voltage across the primary terminals of the injection transformer of the correct phase and magnitude to gradually reset any flux offset in the injection transformer to substantially zero over time.

5. A flux control system according to any one of the preceding claims wherein the or each peak flux module comprises: a dead zone modifier that is arranged to generate the limiter term of substantially zero if the calculated core flux level(s) lie within the range defined between 0 and a preset positive flux threshold or alternatively the non-zero limiter term the magnitude of which is dependent on the amount by which the calculated core flux level(s) lie outside the range; and an amplifier that is arranged to amplify the limiter term by a preset scalar and output the amplifier limiter term, the peak flux module being arranged to fed the core flux level(s) back into the compensation voltage(s) via a negative feedback loop comprising a multiplier that is arranged to multiply core flux level(s) by the amplified limiter term.

6. A flux control system according to claim 5 wherein the magnitude of the non-zero limiter term increases linearly in accordance with the amount by which the calculated core flux level(s) lie outside at the range.

7. A flux control system according to any one of the preceding claims wherein the three-phase compensation voltage(s) and flux level(s) are represented collectively in the stationary reference frame.

8. A flux control system according to claim 7 wherein the three-phase compensation voltage(s) and flux level(s) are represented in the stationary reference frame in Cartesian co-ordinates as alpha and beta terms.

9. A flux control system according to any one of claims 1-6 wherein the three-phase compensation voltage(s) and flux level(s) are represented in terms of a rotating reference frame.

10. A flux control system according to any one of claims 1-6 wherein the three-phase compensation voltage(s) and flux level(s) are represented individually in the time domain.

11. A flux control system according to any one of the preceding claims wherein the active voltage conditioner is for conditioning a three-phase mains supply.

12. A flux control system according to any one of the preceding claims wherein the primacy terminals of the injection transformer are connected to the output of a three-phase inverter, the calculated compensation voltage(s) being utilised to generate corresponding Pulse Width Modulated (PWM) signals for driving the inverter to generate the appropriate compensating voltages for applying to the primary terminals of the injection transformer.

13. A flux control system according to any one of the preceding claims wherein the active voltage conditioner is online such that it continuously monitors the mains supply voltage and continuously applies compensating voltage(s) via the injection transformer to regulate the voltage supply.

14. A method of controlling the core flux level(s) of an injection transformer to avoid magnetic saturation in a three-phase active voltage conditioner that utilises the injection transformer to apply calculated compensation voltage(s), one for each phase, to a mains supply, comprising the steps of:
receiving the compensation voltage(s);
calculating the injection transformer core flux level(s) based on the compensation voltage(s) and an intrinsic time constant term specific to the injection transformer;
applying a first modification to the compensation voltage(s) based on the calculated core flux levels(s) and an extrinsic time constant term calculated to gradually reduce any flux offset(s) in the injection transformer, whereby the step of applying the first modification to the compensation voltage(s) comprises the steps of: amplifying the calculated core flux level(s) by the extrinsic time constant term; and feeding back the amplified core flux level(s) into the compensation voltage(s) via a negative feedback loop;
applying a second modification to the compensation voltage(s) to prevent the core flux level(s) from moving outside a preset range, whereby the step of applying a second modification to the compensation voltage(s) comprises the steps of: generating a limiter term of substantially zero if the calculated core flux level(s) lie within the range defined between 0 and a preset positive flux threshold or alternatively a non-zero limiter term the magnitude of which is dependent on the amount by which the calculated core flux level(s) lie outside the range; amplifying the limiter term by a preset scalar; multiplying the calculated core flux level(s) by the amplified limiter term; and feeding back the multiplied core flux level(s) into the compensation voltage(s) via a negative feedback loop; and
the step of calculating the injection transformer core flux level(s) comprises the steps of: integrating the compensation voltage(s) to generate core flux level(s); amplifying the core flux level(s) by the intrinsic time constant term; and feeding back the amplified core flux level(s) into the compensation voltage(s) via a negative feedback loop, whereby the intrinsic time constant term represents the actual injection transformer resistance divided by the magnetizing inductance of the injection transformer.

15. A method according to claim 14 wherein the step of integrating the compensation voltage(s) to generate core flux level(s) comprises the step of operating a discrete-time integrator modeled in the Z domain.

16. A method according to claim 14 or 15 wherein the extrinsic time constant term is calculated to produce a small voltage across the primary terminals of the injection transformer of the correct phase and magnitude to gradually reset any flux offset in the injection transformer to substantially zero over time.

17. A method according to any one of claims 14-16 wherein the step of generating a non-zero limiter term the magnitude of which is dependent on the amount by which the calculated core flux level(s) lie outside the range comprises the step of increasing the limiter term linearly in accordance with the amount by which the calculated core flux level(s) lie outside the range.

18. A method according to any one of claims 14-17 wherein the three-phase compensation voltage(s) and flux level(s) are represented collectively in a stationary reference frame.

19. A method according to claim 18 wherein the compensation voltage(s) and flux level(s) are represented in the stationary reference frame in Cartesian co-ordinates as alpha and beta terms.

20. A method according to any one of claims 14-17 wherein the three-phase compensation voltage(s) and flux level(s) are represented in terms of a rotating reference frame.

21. A method according to any one of claims 14-17 wherein the three-phase compensation voltage(s) and flux level(s) are represented individually in the time domain.

22. A method according to any one of claims 14-21 wherein the active voltage conditioner is for conditioning a three-phase mains supply.

23. A method according to any one of claims 14-22 wherein the primary terminals of the injection transformer are connected to the output of a three-phase inverter, the calculated compensation voltage(s) being utilised to generate corresponding Pulse Width Modulated (PWM) signals for driving the inverter to generate the appropriate compensating voltages for applying to the primary terminals of the injection transformer.

24. A method according to any one of claims 14-23 wherein the active voltage conditioner is online such that it continuously monitors the mains supply voltage and continuously applies compensating voltage(s) via the injection transformer to regulate the voltage supply.

25. A flux control system for a three-phase active voltage conditioner that utilises an injection transformer to apply compensation voltage to a mains supply based on alpha and beta voltage compensation terms calculated in the stationary reference frame, the flux control system being arranged to modify the alpha and beta terms to avoid magnetic saturation of the injection transformer and comprising:
alpha and beta flux control subsystems that are arranged to receive the alpha and beta voltage compensation terms respectively and ouput modified compensation terms, each subsystem comprising:
a flux model module that is arranged to generate an alpha or beta flux term based on the alpha or beta voltage compensation term and an intrinsic time constant term specific to the injection transformer., whereby each flux model module comprises an integrator that is arranged to integrate the alpha or beta voltage compensation term and output an alpha or beta flux term, the alpha or beta flux term being fed back into the input of the integrator via a negative feedback loop comprising an amplifier that is arranged to amplify the alpha or beta flux term by the intrinsic time constant term, whereby the intrinsic time constant term represents the actual injection transformer resistance divided by the magnetizing inductance of the injection transformer; and
a flux offset module that is arranged to apply a first modification to the alpha or beta voltage compensation term based on the alpha or beta flux term generated by the flux model module and an extrinsic time constant term calculated to gradually reduce any flux offset in the injection transformer, whereby each flux offset module is arranged to fed the alpha or beta flux term back into the alpha or beta voltage compensation term via a negative feedback loop comprising an amplifier that is arranged to amplify the alpha or beta flux term by the extrinsic time constant term; and
a peak flux limiter that is arranged to calculate a peak flux level representation for the injection transformer based on the alpha and beta flux terms from the alpha and beta flux control subsystems and generate a limiter term based on a comparison of the calculated peak flux level representation to a preset positive flux threshold, the alpha and beta flux control subsystems each further comprising:
a peak flux module that is arranged to apply a second modification to the alpha or beta voltage compensation term based on the alpha or beta flux term generated by the flux model module and the limiter term generate by the peak flux limiter to prevent the peak flux level representation in the injection transformer from exceeding the positive flux threshold.

26. A flux control system according to claims 25 wherein the peak flux limiter comprises: a peak flux level module that is arranged to calculate the peak flux level representation for the injection transformer based on the alpha and beta flux terms from the alpha and beta flux control subsystems; a dead zone modifier that receivers the calculated peak flux level representation and that is arranged to generate a limiter term of substantially zero if the peak flux level representation lies within the range between 0 and the preset positive flux threshold or alternatively a non-zero limiter term the magnitude of which is dependent on the amount by which the calculated peak flux level representation exceeds the positive flux threshold; and an amplifier that is arranged to amplify the limiter term by a preset scalar and output the amplifier limiter term.

27. A flux control system according to claim 25 or 26 wherein each peak flux module is arranged to fed the alpha or beta flux term back into the alpha or beta voltage compensation term via a negative feedback loop comprising a multiplier that is arranged to multiply the alpha or beta flux term by the amplified limiter term from the peak flux limiter.

28. A flux control system according to any one of claims 25-27 wherein the active voltage conditioner is for conditioning a three-phase mains supply.

29. A flux control system according to any one of claims 25-28 wherein the primary terminals of the injection transformer are connected to the output of a three-phase inverter, the alpha and beta voltage compensation terms calculated in the stationary reference frame being utilised to generate corresponding Pulse Width Modulated (PWM) signals for driving the invertet to generate the appropriate compensating voltages for applying to the primary terminals of the injection transformer.

30. A flux control system according to any one of claims 25-29 wherein the active voltage conditioner is online such that it continuously monitors the mains supply voltage and continuously applies compensating voltage via the injection transformer to regulate the voltage supply.

31. A method of controlling the core flux of an injection transformer to avoid magnetic saturation in a three-phase active voltage conditioner that utilises the injection transformer to apply compensation voltage to a mains supply based on alpha and beta voltage compensation terms calculated in the stationary reference frame, comprising the steps of:
receiving the alpha and beta voltage compensation terms;
modeling the injection transformer flux and generating alpha and beta flux terms based on the alpha and beta voltage compensation terms respectively and an intrinsic time constant term specific to the injection transformer, whereby the step of modeling the injection transformer flux and generating alpha and beta flux terms comprises the steps of: integrating the alpha and beta voltage compensation terms to generate respective alpha and beta flux terms; amplifying the alpha and beta flux terms by the intrinsic time constant term, whereby the intrinsic time constant term represents the actual injection transformer resistance divided by the mnagnetizing inductance of the injection transformer; and feeding back the amplified alpha and beta flux terms into their respective alpha and beta voltage compensation terms via a negative feedback loop;
applying a first modification to the alpha and beta voltage compensation terms based on the alpha and beta flux terms generated respectively and an extrinsic time constant term calculated to gradually reduce any flux offset in the injection transformer, whereby the step of applying a first modification to the alpha and beta voltage compensation terms comprises the steps of: amplifying the alpha and beta flux terms by the extrinsic time constant term: and feeding back the amplified alpha and beta flux terms into their respective alpha and beta voltage compensation terms via a negative feedback loop;
calculating a peak flux level representation for the injection transformer based on the alpha and beta flux terms and generating a limiter term based on a comparison of the calculated peak flux level representation to a preset positive flux threshold; and
applying a second modification to the alpha and beta voltage compensation terms based on the alpha and beta flux terms generated respectively and the limiter term generated to prevent the peak flux level representation in the injection transformer from exceeding the positive flux threshold.

32. A method according to claim 31 wherein the step of generating a limiter term based on a comparison of the calculated peak flux level representation to the preset positive flux threshold comprises the steps of: generating a limiter term of substantially zero if the calculated peak flux level lies within the range between 0 and the preset positive flux threshold or alternatively a non-zero limiter term the magnitude of which is dependent on the amount by which the calculated peak flux level representation exceeds the positive flux threshold; and amplifying the limiter term by a preset scalar.

33. A method according to claim 31 or 32 wherein the step of applying a second modification to the alpha and beta voltage compensation terms comprises the steps of multiplying the alpha and beta flux terms by the amplified limiter term; and feeding back the multiplied alpha and beta flux terms into their respective alpha and beta voltage compensation terms via a negative feedback loop.

34. A method according to any one of claims 31-33 wherein the active voltage conditioner is for conditioning a three-phase mains supply.

35. A method according to any one of claims 31-34 wherein the primary terminals of the injection transformer are connected to the output of a three-phase inverter, die alpha and beta voltage compensation terms calculated in the stationary reference frame being utilised to generate corresponding Pulse Width Modulated (PWM) signals for driving the inverter to generate the appropriate compensating voltages for applying to the primary terminals of the injection transformer.

36. A method according to any one of claims 31-35 wherein the active voltage conditioner is online such that it continuously monitors the mains supply voltage and continuously applies compensating voltage via the injection transformer to regulate the voltage supply.

## Patentansprüche

1. Flusssteuersystem für einen aktiven Dreiphasen-Spannungskonditionierer, der einen Injektionstransformator verwendet, um berechnete Kompensationsspannung(en), eine für jede Phase, an eine Netzstromversorgung anzulegen, wobei das Flusssteuersystem dafür ausgelegt ist, die Kompensationsspannung(en), die an die Primäranschlüsse des Injektionstransformators anzulegen ist (sind), zu modifizieren, um die magnetische Sättigung des Injektionstransformators zu vermeiden, und Folgendes umfasst:
ein Modul oder Module für ein Modell des magnetischen Flusses, das bzw. die dafür ausgelegt ist bzw. sind, den (die) Kernflusspegel des Injektionstransformators basierend auf der (den) Kompensationsspannung(en) und einem Term einer intrinsischen Zeitkonstante, der für den Injektionstransformator spezifisch ist, zu berechnen;
ein Flussversatzmodul oder -module, das bzw. die dafür ausgelegt ist bzw. sind, basierend auf dem (den) durch das Modul oder die Module für ein Modell des Flusses berechneten Kernflusspegel(n) und einem Term einer extrinsischen Zeitkonstanten, der berechnet wird, um jeden Flussversatz (alle Flussversätze) in dem Injektionstransformator allmählich zu verringern, eine erste Modifikation auf die Kompensationsspannung(en) anzuwenden, wobei der Schritt des Anwendens der ersten Modifikation auf die Kompensationsspannung(en) die folgenden Schritte umfasst: Verstärken des berechneten Kernflusspegels (der berechneten Kernflusspegel) mit dem Term der extrinsischen Zeitkonstanten; und Rückkoppeln des verstärkten Kernflusspegels (der verstärkten Kernflusspegel) über eine negative Rückkopplungsschleife in die Kompensationsspannung(en);
ein Spitzenflussmodul oder -module, das bzw. die dafür ausgelegt ist bzw. sind, eine zweite Modifikation auf die Kompensationsspannung(en) anzuwenden, um zu verhindern, dass sich der (die) Kernflusspegel außerhalb eines vorgegebenen Bereichs bewegt (bewegen), wobei der Schritt des Anwendens einer zweiten Modifikation auf die Kompensationsspannung(en) die folgenden Schritte umfasst: Erzeugen eines Begrenzerterms von im Wesentlichen null, falls der berechnete (die berechneten) Kernflusspegel innerhalb des Bereichs liegt (liegen), der zwischen 0 und einem vorgegebenen positiven Flussschwellenwert definiert ist, oder alternativ eines von null verschiedenen Begrenzerterms, dessen Größe von dem Betrag abhängig ist, um den der berechnete (die berechneten) Kernflusspegel außerhalb des Bereichs liegt (liegen); Verstärken des Begrenzerterms mit einem vorgegebenen Skalar; Multiplizieren des berechneten Kernflusspegels (der berechneten Kernflusspegel) mit dem verstärkten Begrenzerterm; und Rückkoppeln des multiplizierten Kernflusspegels (der multiplizierten Kernflusspegel) über eine negative Rückkopplungsschleife in die Kompensationsspannung(en); und
wobei das oder jedes Modul für ein Modell des magnetischen Flusses einen Integrator umfasst, der dafür ausgelegt ist, die Kompensationsspannung(en) zu integrieren und den (die) Kernflusspegel auszugeben, wobei der (die) Kernflusspegel über eine negative Rückkopplungsschleife, die einen Verstärker, der dafür ausgelegt ist, den (die) Kernflusspegel mit dem Term der intrinsischen Zeitkonstanten zu verstärken, umfasst, in den Eingang des Integrators zurückgekoppelt wird (werden), wobei der Term der intrinsischen Zeitkonstanten den tatsächlichen Widerstand des Injektionstransformators, geteilt durch die magnetische Induktivität des Injektionstransformators repräsentiert.

2. Flusssteuersystem nach Anspruch 1, wobei der Integrator ein im Z-Bereich modellierter zeitdiskreter Integrator ist.

3. Flusssteuersystem nach einem der vorhergehenden Ansprüche, wobei das oder jedes Flussversatzmodul dafür ausgelegt ist, den (die) berechneten Kernflusspegel über eine negative Rückkopplungsschleife, die einen Verstärker, der dafür ausgelegt ist, den (die) Kernflusspegel mit dem Term der extrinsischen Zeitkonstanten zu verstärken, umfasst, in die Kompensationsspannung(en) rückzukoppeln.

4. Flusssteuersystem nach Anspruch 3, wobei der Term der extrinsischen Zeitkonstanten berechnet wird, um eine kleine Spannung über den Primäranschlüssen des Injektionstransformators mit der richtigen Phase und Grö-βe zu erzeugen, um jeden Flussversatz in dem Injektionstransformator während der Zeit allmählich auf im Wesentlichen null zurückzusetzen.

5. Flusssteuersystem nach einem der vorhergehenden Ansprüche, wobei das oder jedes Spitzenflussmodul Folgendes umfasst: einen Totbereichsmodifizierer, der dafür ausgelegt ist, den Begrenzerterm von im Wesentlichen null, falls der berechnete (die berechneten) Kernflusspegel innerhalb des Bereichs liegt (liegen), der zwischen 0 und einem vorgegebenen positiven Flussschwellenwert definiert ist, oder alternativ den von null verschiedenen Begrenzerterm, dessen Größe von dem Betrag abhängig ist, um den der berechnete (die berechneten) Kernflusspegel außerhalb des Bereichs liegt (liegen), zu erzeugen; und einen Verstärker, der dafür ausgelegt ist, den Begrenzerterm mit einem vorgegebenen Skalar zu verstärken und den verstärkten Begrenzerterm auszugeben, wobei das Spitzenflussmodul dafür ausgelegt ist, den (die) Kernflusspegel über eine negative Rückkopplungsschleife, die einen Multiplizierer, der dafür ausgelegt ist, den (die) Kernflusspegel mit dem verstärkten Begrenzerterm zu multiplizieren, umfasst, in die Kompensationsspannung(en) rückzukoppeln.

6. Flusssteuersystem nach Anspruch 5, wobei die Größe des von null verschiedenen Begrenzerterms linear in Übereinstimmung mit dem Betrag zunimmt, um den der berechnete (die berechneten) Kernflusspegel außerhalb des Bereichs liegt (liegen).

7. Flusssteuersystem nach einem der vorhergehenden Ansprüche, wobei die Dreiphasen-Kompensationsspannung(en) und der (die) Flusspegel gemeinsam in dem stationären Bezugssystem dargestellt sind.

8. Flusssteuersystem nach Anspruch 7, wobei die Dreiphasen-Kompensationsspannung(en) und der (die) Flusspegel in dem stationären Bezugssystem in kartesischen Koordinaten als Alpha- und Beta-Terme dargestellt sind.

9. Flusssteuersystem nach einem der Ansprüche 1-6, wobei die Dreiphasen-Kompensationsspannung(en) und der (die) Flusspegel bezüglich eines rotierenden Bezugssystems dargestellt sind.

10. Flusssteuersystem nach einem der Ansprüche 1-6, wobei die Dreiphasen-Kompensationsspannung(en) und der (die) Flusspegel einzeln im Zeitbereich dargestellt sind.

11. Flusssteuersystem nach einem der vorhergehenden Ansprüche, wobei der aktive Spannungskonditionierer der Konditionierung einer Dreiphasen-Netzstromversorgung dient.

12. Flusssteuersystem nach einem der vorhergehenden Ansprüche, wobei die Primäranschlüsse des Injektionstransformators mit dem Ausgang eines Dreiphaseninverters verbunden sind, wobei die berechnete(n) Kompensationsspannung(en) verwendet wird (werden), um entsprechende pulsbreitenmodulierte Signale (PWM-Signale) zum Ansteuern des Inverters zu erzeugen, um die geeigneten Kompensationsspannungen für das Anlegen an die Primäranschlüsse des Injektionstransformators zu erzeugen.

13. Flusssteuersystem nach einem der vorhergehenden Ansprüche, wobei der aktive Spannungskonditionierer online ist, so dass er die Versorgungsnetzspannung kontinuierlich überwacht und die Kompensationsspannung(en) über den Injektionstransformator kontinuierlich anlegt, um die Spannungsversorgung zu regeln.

14. Verfahren zum Steuern des Kernflusspegels (der Kernflusspegel) eines Injektionstransformators, um die magnetische Sättigung in einem aktiven Dreiphasen-Spannungskonditionierer zu vermeiden, der den Injektionstransformator verwendet, um berechnete Kompensationsspannung(en), eine für jede Phase, an eine Netzstromversorgung anzulegen, das die folgenden Schritte umfasst:
Empfangen der Kompensationsspannung(en);
Berechnen des Kernflusspegels (der Kernflusspegel) des Injektionstransformators basierend auf der (den) Kompensationsspannung(en) und einem Term einer intrinsischen Zeitkonstanten, der für den Injektionstransformator spezifisch ist;
Anwenden einer ersten Modifikation basierend auf dem (den) berechneten Kernflusspegel(n) und einem Term einer extrinsischen Zeitkonstanten, der berechnet wird, um jeden Flussversatz (alle Flussversätze) in dem Injektionstransformator allmählich zu verringern, auf die Kompensationsspannung(en), wobei der Schritt des Anwendens der ersten Modifikation auf die Kompensationsspannung(en) die folgenden Schritte umfasst: Verstärken des berechneten Kernflusspegels (der berechneten Kernflusspegel) mit dem Term der extrinsischen Zeitkonstanten; und Rückkoppeln des verstärkten Kernflusspegels (der verstärkten Kernflusspegel) über eine negative Rückkopplungsschleife in die Kompensationsspannung(en);
Anwenden einer zweiten Modifikation auf die Kompensationsspannung(en), um zu verhindern, dass sich der (die) Kernflusspegel außerhalb eines vorgegebenen Bereichs bewegt (bewegen), wobei der Schritt des Anwendens einer zweiten Modifikation auf die Kompensationsspannung(en) die folgenden Schritte umfasst: Erzeugen eines Begrenzerterms von im Wesentlichen null, falls der berechnete (die berechneten) Kernflusspegel innerhalb des Bereichs (liegt) liegen, der zwischen 0 und einem vorgegebenen positiven Flussschwellenwert definiert ist, oder alternativ eines von null verschiedenen Begrenzerterms, dessen Größe von dem Betrag abhängig ist, um den der berechnete (die berechneten) Kernflusspegel außerhalb des Bereichs liegt (liegen); Verstärken des Begrenzerterms mit einem vorgegebenen Skalar; Multiplizieren des berechneten Kernflusspegels (der berechneten Kernflusspegel) mit dem verstärkten Begrenzerterm; und Rückkoppeln des multiplizierten Kernflusspegels (der multiplizierten Kernflusspegel) über eine negative Rückkopplungsschleife in die Kompensationsspannung(en); und
wobei der Schritt des Berechnens des Kernflusspegels (der Kernflusspegel) des Injektionstransformators die folgenden Schritte umfasst: Integrieren der Kompensationsspannung(en), um den (die) Kernflusspegel zu erzeugen; Verstärken des Kernflusspegels (der Kernflusspegel) mit dem Term der intrinsischen Zeitkonstanten; und Rückkoppeln des verstärkten Kernflusspegels (der verstärkten Kernflusspegel) über eine negative Rückkopplungsschleife in die Kompensationsspannung(en), wobei der Term der intrinsischen Zeitkonstanten den tatsächlichen Widerstand des Injektionstransformators, geteilt durch die magnetische Induktivität des Injektionstransformators repräsentiert.

15. Verfahren nach Anspruch 14, wobei der Schritt des Integrierens der Kompensationsspannung(en), um den (die) Kernflusspegel zu erzeugen, den Schritt des Betreibens eines im Z-Bereich modellierten zeitdiskreten Integrators umfasst.

16. Verfahren nach Anspruch 14 oder 15, wobei der Term der extrinsischen Zeitkonstanten berechnet wird, um eine kleine Spannung über den Primäranschlüssen des Injektionstransformators mit der richtigen Phase und Grö-βe zu erzeugen, um jeden Flussversatz in dem Injektionstransformator während der Zeit allmählich auf im Wesentlichen null zurückzusetzen.

17. Verfahren nach einem der Ansprüche 14-16, wobei der Schritt des Erzeugens eines von null verschiedenen Begrenzerterms, dessen Größe von dem Betrag abhängig ist, um den der berechnete (die berechneten) Kernflusspegel außerhalb des Bereichs liegt (liegen), den Schritt des linearen Vergrößerns des Begrenzerterms in Übereinstimmung mit dem Betrag, um den der berechnete (die berechneten) Kernflusspegel außerhalb des Bereichs liegt (liegen), umfasst.

18. Verfahren nach einem der Ansprüche 14-17, wobei die Dreiphasen-Kompensationsspannung(en) und der (die) Flusspegel gemeinsam in einem stationären Bezugssystem dargestellt sind.

19. Verfahren nach Anspruch 18, wobei die Dreiphasen-Kompensationsspannung(en) und der (die) Flusspegel in dem stationären Bezugssystem in kartesischen Koordinaten als Alpha- und Beta-Terme dargestellt sind.

20. Verfahren nach einem der Ansprüche 14-17, wobei die Dreiphasen-Kompensationsspannung(en) und der (die) Flusspegel bezüglich eines rotierenden Bezugssystems dargestellt sind.

21. Verfahren nach einem der Ansprüche 14-17, wobei die Dreiphasen-Kompensationsspannung(en) und der (die) Flusspegel einzeln im Zeitbereich dargestellt sind.

22. Verfahren nach einem der Ansprüche 14-21, wobei der aktive Spannungskonditionierer der Konditionierung einer Dreiphasen-Netzstromversorgung dient.

23. Verfahren nach einem der Ansprüche 14-22, wobei die Primäranschlüsse des Injektionstransformators mit dem Ausgang eines Dreiphaseninverters verbunden sind, wobei die berechnete(n) Kompensationsspannung(en) verwendet werden, um entsprechende pulsbreitenmodulierte Signale (PWM-Signale) zum Ansteuern des Inverters zu erzeugen, um die geeigneten Kompensationsspannungen für das Anlegen an die Primäranschlüsse des Injektionstransformators zu erzeugen.

24. Verfahren nach einem der Ansprüche 14-23, wobei der aktive Spannungskonditionierer online ist, so dass er die Versorgungsnetzspannung kontinuierlich überwacht und die Kompensationsspannung(en) über den Injektionstransformator kontinuierlich anlegt, um die Spannungsversorgung zu regeln.

25. Flusssteuersystem für einen aktiven Dreiphasen-Spannungskonditionierer, der einen Injektionstransformator verwendet, um basierend auf Alpha- und Beta-Spannungskompensationstermen, die in dem stationären Bezugssystem berechnet werden, eine Kompensationsspannung an eine Netzstromversorgung anzulegen, wobei das Flusssteuersystem dafür ausgelegt ist, die Alpha- und Beta-Terme zu modifizieren, um die magnetische Sättigung des Injektionstransformators zu vermeiden, und Folgendes umfasst:
Alpha- und Beta-Flusssteuer-Untersysteme, die dafür ausgelegt sind, Alpha- bzw. Beta-Spannungskompensationsterme zu empfangen und modifizierte Kompensationsterme auszugeben, wobei jedes Untersystem Folgendes umfasst:
ein Flussmodellmodul, das dafür ausgelegt ist, einen Alpha- oder einen Betaflussterm basierend auf dem Alpha- oder dem Beta-Spannungskompensationsterm und einem Term einer intrinsischen Zeitkonstanten, der für den Injektionstransformator spezifisch ist, zu erzeugen, wobei jedes Flussmodellmodul einen Integrator umfasst, der dafür ausgelegt ist, den Alpha- oder den Beta-Spannungskompensationsterm zu integrieren und einen Alpha- oder Beta-Flussterm auszugeben, wobei der Alpha- oder der Beta-Flussterm über eine negative Rückkopplungsschleife, die einen Verstärker, der dafür ausgelegt ist, den Alpha- oder den Beta-Flussterm mit dem Term der intrinsischen Zeitkonstanten zu verstärken, umfasst, in den Eingang des Integrators rückgekoppelt werden, wobei der Term der intrinsischen Zeitkonstanten den tatsächlichen Widerstand des Injektionstransformators, geteilt durch die magnetische Induktivität des Injektionstransformators repräsentiert; und
ein Flussversatzmodul, das dafür ausgelegt ist, basierend auf dem durch das Flussmodellmodul erzeugten Alpha- oder Beta-Flussterm und einem Term einer extrinsischen Zeitkonstanten, der berechnet wird, um jeden Flussversatz in dem Injektionstransformator allmählich zu verringern, eine erste Modifikation auf den Alpha- oder den Beta-Spannungskompensationsterm anzuwenden, wobei jedes Flussversatzmodul dafür ausgelegt ist, den Alpha- oder den Beta-Flussterm über eine negative Rückkopplungsschleife, die einen Verstärker, der dafür ausgelegt ist, den Alpha- oder den Beta-Flussterm mit dem Term der extrinsischen Zeitkonstanten zu verstärken, umfasst, in den Alpha- oder den Beta-Spannungskompensationsterm rückzukoppeln; und
einen Spitzenflussbegrenzer, der dafür ausgelegt ist, eine Darstellung des Spitzenflusspegels für den Injektionstransformator basierend auf den Alpha- und Beta-Flusstermen von den Alpha- und Beta-Flusssteuer-Untersystemen zu berechnen und basierend auf einem Vergleich der berechneten Darstellung des Spitzenflusspegels mit einem vorgegebenen positiven Flussschwellenwert einen Begrenzerterm zu erzeugen, wobei jedes der Alpha- und Beta-Flusssteuer-Untersysteme ferner Folgendes umfasst:
ein Spitzenflussmodul, das dafür ausgelegt ist, basierend auf dem durch das Flussmodellmodul erzeugten Alpha- oder Beta-Flussterm und dem durch den Spitzenflussbegrenzer erzeugten Begrenzerterm eine zweite Modifikation auf den Alpha- oder Beta-Spannungskompensationsterm anzuwenden, um zu verhindern, dass die Darstellung der Spitzenflusspegels in dem Injektionstransformator den positiven Flussschwellenwert übersteigt.

26. Flusssteuersystem nach Anspruch 25, wobei der Spitzenflussbegrenzer Folgendes umfasst: ein Spitzenflusspegelmodul, das dafür ausgelegt ist, die Darstellung des Spitzenflusspegels für den Injektionstransformator basierend auf den Alpha- und Beta-Flusstermen von den Alpha- und Beta-Flusssteuer-Untersystemen zu berechnen; einen Totbereichsmodifizierer, der die berechnete Darstellung des Spitzenflusspegels empfängt und der dafür ausgelegt ist, einen Begrenzerterm von im Wesentlichen null, falls die Darstellung des Spitzenflusspegels innerhalb des Bereichs zwischen 0 und dem vorgegebenen positiven Flussschwellenwert liegt, oder alternativ einen von null verschiedenen Begrenzerterm, dessen Größe von dem Betrag abhängig ist, um den die berechnete Darstellung des Spitzenflusspegels den positiven Flussschwellenwert übersteigt, zu erzeugen; und einen Verstärker, der dafür ausgelegt ist, den Begrenzerterm mit einem vorgegebenen Skalar zu verstärken und den verstärkten Begrenzerterm auszugeben.

27. Flusssteuersystem nach Anspruch 25 oder 26, wobei jedes Spitzenflussmodul dafür ausgelegt ist, den Alpha- oder den Beta-Flussterm über eine negative Rückkopplungsschleife, die einen Multiplizierer, der dafür ausgelegt ist, den Alpha- oder den Beta-Flussterm mit dem verstärkten Begrenzerterm von dem Spitzenflussbegrenzer zu multiplizieren, umfasst, in den Alpha- oder den Beta-Spannungskompensationsterm rückzukoppeln.

28. Flusssteuersystem nach einem der Ansprüche 25-27, wobei der aktive Spannungskonditionierer der Konditionierung einer Dreiphasen-Netzstromversorgung dient.

29. Flusssteuersystem nach einem der Ansprüche 25-28, wobei die Primäranschlüsse des Injektionstransformators mit dem Ausgang eines Dreiphaseninverters verbunden sind, wobei die in dem stationären Bezugssystem berechneten Alpha- und Beta-Spannungskompensationsterme verwendet werden, um entsprechende pulsbreitenmodulierte Signale (PWM-Signale) zum Ansteuern des Inverters zu erzeugen, um die geeigneten Kompensationsspannungen für das Anlegen an die Primäranschlüsse des Injektionstransformators zu erzeugen.

30. Flusssteuersystem nach einem der Ansprüche 25-29, wobei der aktive Spannungskonditionierer online ist, so dass er die Versorgungsnetzspannung kontinuierlich überwacht und die Kompensationsspannung über den Injektionstransformator kontinuierlich anlegt, um die Spannungsversorgung zu regeln.

31. Verfahren zum Steuern des Kernflusses eines Injektionstransformators, um die magnetische Sättigung in einem aktiven Dreiphasen-Spannungskonditionierer zu vermeiden, der den Injektionstransformator verwendet, um basierend auf Alpha- und Beta-Spannungskompensationstermen, die in dem stationären Bezugssystem berechnet werden, eine Kompensationsspannung an eine Netzstromversorgung anzulegen, das die folgenden Schritte umfasst:
Empfangen der Alpha- und Beta-Spannungskompensationsterme;
Modellieren des Injektionstransformatorflusses und Erzeugen der Alpha- und Beta-Flussterme basierend auf den Alpha- bzw. Beta-Spannungskompensationstermen und einem Term einer intrinsischen Zeitkonstanten, der für den Injektionstransformator spezifisch ist, wobei der Schritt des Modellierens des Injektionstransformatorflusses und des Erzeugens der Alpha- und Beta-Flussterme die folgenden Schritte umfasst: Integrieren der Alpha- und Beta-Spannungskompensationsterme, um jeweilige Alpha- und Beta-Flussterme zu erzeugen, Verstärken der Alpha- und Beta-Flussterme mit dem Term der intrinsischen Zeitkonstanten, wobei der Term der intrinsischen Zeitkonstanten den tatsächlichen Widerstand des Injektionstransformators, geteilt durch die magnetische Induktivität des Injektionstransformators repräsentiert; und Rückkoppeln der verstärkten Alpha- und Beta-Flussterme über eine negative Rückkopplungsschleife in ihre jeweiligen Alpha- und Beta-Spannungskompensationsterme;
Anwenden einer ersten Modifikation auf die Alpha- und Beta-Spannungskompensationsterme basierend auf den erzeugten Alpha- bzw. Beta-Flusstermen und einem Term einer extrinsischen Zeitkonstanten, der berechnet wird, um jeden Flussversatz in dem Injektionstransformator allmählich zu verringern, wobei der Schritt des Anwendens einer ersten Modifikation auf die Alpha- und Beta-Spannungskompensationsterme die folgenden Schritte umfasst: Verstärken der Alpha- und Beta-Flussterme mit dem Term der extrinsischen Zeitkonstanten; und Rückkoppeln der verstärkten Alpha- und Beta-Flussterme über eine negative Rückkopplungsschleife in ihre jeweiligen Alpha- und Beta-Spannungskompensationsterme;
Berechnen einer Darstellung des Spitzenflusspegels für den Injektionstransformator basierend auf den Alpha- und Beta-Flusstermen und Erzeugen eines Begrenzerterms basierend auf einem Vergleich der berechneten Darstellung des Spitzenflusspegels mit einem vorgegebenen positiven Flussschwellenwert; und
Anwenden einer zweiten Modifikation basierend auf den erzeugten Alpha- bzw. Beta-Flusstermen und dem erzeugten Begrenzerterm auf die Alpha- und Beta-Spannungskompensationsterme, um zu verhindern, dass die Darstellung der Spitzenflusspegels in dem Injektionstransformator den positiven Flussschwellenwert übersteigt.

32. Verfahren nach Anspruch 31, wobei der Schritt des Erzeugens eines Begrenzerterms basierend auf einem Vergleich der berechneten Darstellung des Spitzenflusspegels mit dem vorgegebenen positiven Flussschwellenwert die folgenden Schritte umfasst: Erzeugen eines Begrenzerterms von im Wesentlichen null, falls die berechnete Darstellung des Spitzenflusspegels innerhalb des Bereichs zwischen 0 und dem vorgegebenen positiven Flussschwellenwert liegt, oder alternativ eines von null verschiedenen Begrenzerterms, dessen Größe von dem Betrag abhängig ist, um den die berechnete Darstellung des Spitzenflusspegels den positiven Flussschwellenwert übersteigt; und Verstärken des Begrenzerterms mit einem vorgegebenen Skalar.

33. Verfahren nach Anspruch 31 oder 32, wobei der Schritt des Anwendens einer zweiten Modifikation auf die Alpha- und Beta-Spannungskompensationsterme die folgenden Schritte umfasst: Multiplizieren der Alpha- und Beta-Flussterme mit dem verstärkten Begrenzerterm; und Rückkoppeln der multiplizierten Alpha- und Beta-Flussterme über eine negative Rückkopplungsschleife in ihre jeweiligen Alpha- und Beta-Spannungskompensationsterme.

34. Verfahren nach einem der Ansprüche 31-33, wobei der aktive Spannungskonditionierer der Konditionierung einer Dreiphasen-Netzstromversorgung dient.

35. Verfahren nach einem der Ansprüche 31-34, wobei die Primäranschlüsse des Injektionstransformators mit dem Ausgang eines Dreiphaseninverters verbunden sind, wobei die in dem stationären Bezugssystem berechneten Alpha- und Beta-Spannungskompensationsterme verwendet werden, um entsprechende pulsbreitenmodulierte Signale (PWM-Signale) zum Ansteuern des Inverters zu erzeugen, um die geeigneten Kompensationsspannungen für das Anlegen an die Primäranschlüsse des Injektionstransformators zu erzeugen.

36. Verfahren nach einem der Ansprüche 31-35, wobei der aktive Spannungskonditionierer online ist, so dass er die Versorgungsnetzspannung kontinuierlich überwacht und die Kompensationsspannung über den Injektionstransformator kontinuierlich anlegt, um die Spannungsversorgung zu regeln.

## Revendications

1. Système de régulation de flux pour un conditionneur de tension triphasée active utilisant un transformateur d'injection pour appliquer une (des) tension(s) de compensation calculée(s), une pour chaque phase, à une alimentation secteur, le système de régulation de flux étant conçu pour modifier la (les) tension(s) de compensation destinée(s) à être appliquée(s) aux bornes primaires du transformateur d'injection de manière à éviter une saturation magnétique du transformateur d'injection et comprenant :
un module ou des modules de modèle de flux magnétique conçu(s) pour calculer le(s) niveau(x) de flux dans le noyau du transformateur d'injection en fonction de la (des) tension(s) de compensation et d'un terme de constante de temps intrinsèque propre au transformateur d'injection ;
un module ou des modules de décalage de flux conçu(s) pour appliquer une première modification à la (aux) tension(s) de compensation en fonction du (des) niveau(x) de flux dans le noyau calculé(s) par le module ou les modules de modèle de flux et d'un terme de constante de temps extrinsèque calculé de manière à réduire progressivement tout décalage de flux dans le transformateur d'injection, l'étape consistant à appliquer la première modification à la (aux) tension(s) de compensation comprenant les étapes consistant à : amplifier le(s) niveau(x) de flux dans le noyau calculé(s) par le terme de constante de temps extrinsèque ; et réinjecter le(s) niveau(x) de flux dans le noyau amplifié(s) dans la (les) tension(s) de compensation par le biais d'une boucle de contre-réaction ;
un module ou des modules de flux maximal conçu(s) pour appliquer une deuxième modification à la (aux) tension(s) de modification pour empêcher le(s) niveau(x) de flux dans le noyau de sortir d'une plage préétablie, l'étape consistant à appliquer une deuxième modification à la (aux) tension(s) de compensation comprenant les étapes consistant à : générer un terme limiteur sensiblement nul si le(s) niveau(x) de flux dans le noyau calculé(s) s'inscrit (s'inscrivent) dans la plage définie entre 0 et un seuil de flux positif préétabli ou, en variante, un terme limiteur non nul dont l'amplitude dépend de la quantité de laquelle le(s) niveau(x) de flux dans le noyau calculé(s) sort (ent) de la plage ; amplifier le terme limiteur par un scalaire préétabli ; multiplier le(s) niveau(x) de flux dans le noyau calculé(s) par le terme limiteur amplifié ; et réinjecter le(s) niveau(x) de flux dans le noyau multiplié(s) dans la (les) tension(s) de compensation par le biais d'une boucle de contre-réaction ; et
le ou chaque module de modèle de flux magnétique comprenant un intégrateur conçu pour intégrer la (les) tension(s) de compensation et fournir un (des) niveau(x) de flux dans le noyau, le(s) niveau(x) de flux dans le noyau étant réinjecté(s) à l'entrée de l'intégrateur par le biais d'une boucle de contre-réaction comprenant un amplificateur conçu pour amplifier le(s) niveau(x) de flux dans le noyau par le terme de constante de temps intrinsèque, le terme de constante de temps intrinsèque représentant la résistance effective du transformateur d'injection divisée par l'inductance d'aimantation du transformateur d'injection.

2. Système de régulation de flux selon la revendication 1, dans lequel l'intégrateur est un intégrateur en temps discret modélisé dans le domaine Z.

3. Système de régulation de flux selon l'une quelconque des revendications précédentes, dans lequel le ou chaque module de décalage de flux est conçu pour réinjecter le(s) niveau(x) de flux dans le noyau calculé(s) dans la (les) tension(s) de compensation par le biais d'une boucle de contre-réaction comprenant un amplificateur conçu pour amplifier le(s) niveau(x) de flux dans le noyau par le terme de constante de temps extrinsèque.

4. Système de régulation de flux selon la revendication 3, dans lequel le terme de constante de temps extrinsèque est calculé pour produire entre les bornes primaires du transformateur d'injection une faible tension de phase et d'amplitude correctes pour rétablir progressivement tout décalage de flux dans le transformateur d'injection à une valeur sensiblement nulle au fil du temps.

5. Système de régulation de flux selon l'une quelconque des revendications précédentes, dans lequel le ou chaque module de flux maximal comprend : un modificateur de zone morte conçu pour générer le terme limiteur sensiblement nul si le(s) niveau(x) de flux dans le noyau calculé(s) s'inscrit (s'inscrivent) dans la plage définie entre 0 et un seuil de flux positif préétabli ou, en variante, le terme limiteur non nul dont l'amplitude dépend de la quantité de laquelle le(s) niveau(x) de flux dans le noyau calculé(s) sort (ent) de la plage ; et un amplificateur conçu pour amplifier le terme limiteur par un scalaire préétabli et fournir le terme limiteur amplifié, le module de flux maximal étant conçu pour réinjecter le(s) niveau(x) de flux dans le noyau dans la (les) tension(s) de compensation par le biais d'une boucle de contre-réaction comprenant un multiplicateur conçu pour multiplier un (des) niveau(x) de flux dans le noyau par le terme limiteur amplifié.

6. Système de régulation de flux selon la revendication 5, dans lequel l'amplitude du terme limiteur non nul croît linéairement en fonction de la quantité de laquelle le(s) niveau(x) de flux dans le noyau calculé(s) sort (ent) de la plage.

7. Système de régulation de flux selon l'une quelconque des revendications précédentes, dans lequel la (les) tension(s) de compensation triphasée(s) et le(s) niveau(x) de flux sont représentés collectivement dans le référentiel fixe.

8. Système de régulation de flux selon la revendication 7, dans lequel la (les) tension(s) de compensation triphasée(s) et le(s) niveau(x) de flux sont représentés dans le référentiel fixe par des coordonnées cartésiennes sous la forme de termes en alpha et bêta.

9. Système de régulation de flux selon l'une quelconque des revendications 1 à 6, dans lequel la (les) tension(s) de compensation triphasée(s) et le(s) niveau(x) de flux sont représentés dans un référentiel rotatif.

10. Système de régulation de flux selon l'une quelconque des revendications 1 à 6, dans lequel la (les) tension(s) de compensation triphasée(s) et le(s) niveau(x) de flux sont représentés individuellement dans le domaine temporel.

11. Système de régulation de flux selon l'une quelconque des revendications précédentes, dans lequel le conditionneur de tension active sert à conditionner une alimentation secteur triphasée.

12. Système de régulation de flux selon l'une quelconque des revendications précédentes, dans lequel les bornes primaires du transformateur d'injection sont reliées à la sortie d'un onduleur triphasé, la (les) tension(s) de compensation calculée(s) étant utilisée(s) pour générer des signaux modulés en largeur d'impulsion (PWM) correspondants destinés à attaquer l'onduleur pour générer les tensions de compensation appropriées destinées à être appliquées aux bornes primaires du transformateur d'injection.

13. Système de régulation de flux selon l'une quelconque des revendications précédentes, dans lequel le conditionneur de tension active est en ligne de façon à contrôler en continu la tension d'alimentation secteur et à appliquer en continu une (des) tension(s) de compensation par le biais du transformateur d'injection dans le but de réguler la tension d'alimentation.

14. Procédé pour réguler le(s) niveau(x) de flux dans le noyau d'un transformateur d'injection de manière à éviter une saturation magnétique dans un conditionneur de tension active triphasée utilisant le transformateur d'injection pour appliquer une (des) tension(s) de compensation calculée(s), une pour chaque phase, à une alimentation secteur, le procédé comprenant les étapes consistant à :
recevoir la (les) tension(s) de compensation ;
calculer le(s) niveau(x) de flux dans le noyau du transformateur d'injection en fonction de la (des) tension(s) de compensation et d'un terme de constante de temps intrinsèque propre au transformateur d'injection ;
appliquer une première modification à la (aux) tension(s) de compensation en fonction du (des) niveau(x) de flux dans le noyau calculé(s) et d'un terme de constante de temps extrinsèque calculé de manière à réduire progressivement tout décalage de flux dans le transformateur d'injection, l'étape consistant à appliquer la première modification à la (aux) tension(s) de compensation comprenant les étapes consistant à : amplifier le(s) niveau(x) de flux dans le noyau calculé(s) par le terme de constante de temps extrinsèque ; et réinjecter le(s) niveau(x) de flux dans le noyau amplifié(s) dans la (les) tension(s) de compensation par le biais d'une boucle de contre-réaction ;
appliquer une deuxième modification à la (aux) tension(s) de modification pour empêcher le(s) niveau(x) de flux dans le noyau de sortir d'une plage préétablie, l'étape consistant à appliquer une deuxième modification à la (aux) tension(s) de compensation comprenant les étapes consistant à : générer un terme limiteur sensiblement nul si le(s) niveau(x) de flux dans le noyau calculé(s) s'inscrit (s'inscrivent) dans la plage définie entre 0 et un seuil de flux positif préétabli ou, en variante, un terme limiteur non nul dont l'amplitude dépend de la quantité de laquelle le(s) niveau(x) de flux dans le noyau calculé(s) sort (ent) de la plage ; amplifier le terme limiteur par un scalaire préétabli ; multiplier le(s) niveau(x) de flux dans le noyau calculé(s) par le terme limiteur amplifié ; et réinjecter le(s) niveau(x) de flux dans le noyau multiplié(s) dans la (les) tension(s) de compensation par le biais d'une boucle de contre-réaction ; et
l'étape consistant à calculer le (les) niveau(x) de flux dans le noyau du transformateur d'injection comprenant les étapes consistant à : intégrer la (les) tension(s) de compensation pour générer un (des) niveau(x) de flux dans le noyau ; amplifier le(s) niveau(x) de flux dans le noyau par le terme de constante de temps intrinsèque ; et réinjecter le(s) niveau (x) de flux dans le noyau amplifié (s) dans la (les) tension(s) de compensation par le biais d'une boucle de contre-réaction, le terme de constante de temps intrinsèque représentant la résistance effective du transformateur d'injection divisée par l'inductance d'aimantation du transformateur d'injection.

15. Procédé selon la revendication 14, dans lequel l'étape consistant à intégrer la (les) tension(s) de compensation pour générer un (des) niveau(x) de flux dans le noyau comprend l'étape consistant à utiliser un intégrateur en temps discret modélisé dans le domaine Z.

16. Procédé selon la revendication 14 ou 15, dans lequel le terme de constante de temps extrinsèque est calculé pour produire entre les bornes primaires du transformateur d'injection une faible tension de phase et d'amplitude correctes pour rétablir progressivement tout décalage de flux dans le transformateur d'injection à une valeur sensiblement nulle au fil du temps.

17. Procédé selon l'une quelconque des revendications 14 à 16, dans lequel l'étape consistant à générer un terme limiteur non nul dont l'amplitude dépend de la quantité de laquelle le(s) niveau(x) de flux dans le noyau calculé(s) sort(ent) de la plage comprend l'étape consistant à faire croître linéairement le terme limiteur en fonction de la quantité de laquelle le(s) niveau(x) de flux dans le noyau calculé(s) sort (ent) de la plage.

18. Procédé selon l'une quelconque des revendications 14 à 17, dans lequel la (les) tension(s) de compensation triphasée(s) et le(s) niveau(x) de flux sont représentés collectivement dans un référentiel fixe.

19. Procédé selon la revendication 18, dans lequel la (les) tension(s) de compensation et le(s) niveau(x) de flux sont représentés dans le référentiel fixe par des coordonnées cartésiennes sous la forme de termes en alpha et bêta.

20. Procédé selon l'une quelconque des revendications 14 à 17, dans lequel la (les) tension(s) de compensation triphasée(s) et le(s) niveau(x) de flux sont représentés dans un référentiel rotatif.

21. Procédé selon l'une quelconque des revendications 14 à 17, dans lequel la (les) tension(s) de compensation triphasée(s) et le(s) niveau(x) de flux sont représentés individuellement dans le domaine temporel.

22. Procédé selon l'une quelconque des revendications 14 à 21, dans lequel le conditionneur de tension active sert à conditionner une alimentation secteur triphasée.

23. Procédé selon l'une quelconque des revendications 14 à 22, dans lequel les bornes primaires du transformateur d'injection sont reliées à la sortie d'un onduleur triphasé, la (les) tension(s) de compensation calculée(s) étant utilisée(s) pour générer des signaux modulés en largeur d'impulsion (PWM) correspondants destinés à attaquer l'onduleur pour générer les tensions de compensation appropriées destinées à être appliquées aux bornes primaires du transformateur d'injection.

24. Procédé selon l'une quelconque des revendications 14 à 23, dans lequel le conditionneur de tension active est en ligne de façon à contrôler en continu la tension d'alimentation secteur et à appliquer en continu une (des) tension(s) de compensation par le biais du transformateur d'injection dans le but de réguler la tension d'alimentation.

25. Système de régulation de flux pour un conditionneur de tension triphasée active utilisant un transformateur d'injection pour appliquer une tension de compensation à une alimentation secteur en fonction de termes de compensation de tension en alpha et bêta calculés dans le référentiel fixe, le système de régulation de flux étant conçu pour modifier les termes en alpha et bêta de manière à éviter une saturation magnétique du transformateur d'injection et comprenant :
des sous-systèmes de régulation de flux en alpha et bêta conçus pour recevoir les termes de compensation de tension en alpha et bêta, respectivement, et fournir des termes de compensation modifiés, chaque sous-système comprenant :
un module de modèle de flux conçu pour générer un terme de flux en alpha ou bêta en fonction du terme de compensation de tension en alpha ou bêta et d'un terme de constante de temps intrinsèque propre au transformateur d'injection, chaque module de modèle de flux comprenant un intégrateur conçu pour intégrer le terme de compensation de tension en alpha ou bêta et fournir un terme de flux en alpha ou bêta, le terme de flux en alpha ou bêta étant réinjecté à l'entrée de l'intégrateur par le biais d'une boucle de contre-réaction comprenant un amplificateur conçu pour amplifier le terme de flux en alpha ou bêta par le terme de constante de temps intrinsèque, le terme de constante de temps intrinsèque représentant la résistance effective du transformateur d'injection divisée par l'inductance d'aimantation du transformateur d'injection ; et
un module de décalage de flux conçu pour appliquer une première modification au terme de compensation de tension en alpha ou bêta en fonction du terme de flux en alpha ou bêta généré par le module de modèle de flux et d'un terme de constante de temps extrinsèque calculé de manière à réduire progressivement tout décalage de flux dans le transformateur d'injection, chaque module de décalage de flux étant conçu pour réinjecter le terme de flux en alpha ou bêta dans le terme de compensation de tension en alpha ou bêta par le biais d'une boucle de contre-réaction comprenant un amplificateur conçu pour amplifier le terme de flux en alpha ou bêta par le terme de constante de temps extrinsèque ; et
un limiteur de flux maximal conçu pour calculer une représentation de niveau de flux maximal pour le transformateur d'injection en fonction des termes de flux en alpha et bêta provenant des sous-systèmes de régulation de flux en alpha et bêta et générer un terme limiteur en fonction d'une comparaison de la représentation de niveau de flux maximal calculée avec un seuil de flux positif préétabli, les sous-systèmes de régulation de flux en alpha et bêta comprenant en outre chacun :
un module de flux maximal conçu pour appliquer une deuxième modification au terme de compensation de tension en alpha ou bêta en fonction du terme de flux en alpha ou bêta généré par le module de modèle de flux et du terme limiteur généré par le limiteur de flux maximal pour empêcher la représentation de niveau de flux maximal dans le transformateur d'injection de dépasser le seuil de flux positif préétabli.

26. Système de régulation de flux selon la revendication 25, dans lequel le limiteur de flux maximal comprend : un module de niveau de flux maximal conçu pour calculer la représentation de niveau de flux maximal pour le transformateur d'injection en fonction des termes de flux en alpha et bêta provenant des sous-systèmes de régulation de flux en alpha et bêta ; un modificateur de zone morte recevant la représentation de niveau de flux maximal calculée et conçu pour générer un terme limiteur sensiblement nul si la représentation de niveau de flux maximal s'inscrit dans la plage entre 0 et le seuil de flux positif préétabli ou, en variante, un terme limiteur non nul dont l'amplitude dépend de la quantité de laquelle la représentation de niveau de flux maximal calculée dépasse le seuil de flux positif ; et un amplificateur conçu pour amplifier le terme limiteur par un scalaire préétabli et fournir le terme limiteur amplifié.

27. Système de régulation de flux selon la revendication 25 ou 26, dans lequel chaque module de flux maximal est conçu pour réinjecter le terme de flux en alpha ou bêta dans le terme de compensation de tension en alpha ou bêta par le biais d'une boucle de contre-réaction comprenant un multiplicateur conçu pour multiplier le terme de flux en alpha ou bêta par le terme limiteur amplifié issu du limiteur de flux maximal.

28. Système de régulation de flux selon l'une quelconque des revendications 25 à 27, dans lequel le conditionneur de tension active sert à conditionner une alimentation secteur triphasée.

29. Système de régulation de flux selon l'une quelconque des revendications 25 à 28, dans lequel les bornes primaires du transformateur d'injection sont reliées à la sortie d'un onduleur triphasé, les termes de compensation de tension en alpha et bêta calculés dans le référentiel fixe étant utilisés pour générer des signaux modulés en largeur d'impulsion (PWM) correspondants destinés à attaquer l'onduleur pour générer les tensions de compensation appropriées destinées à être appliquées aux bornes primaires du transformateur d'injection.

30. Système de régulation de flux selon l'une quelconque des revendications 25 à 29, dans lequel le conditionneur de tension active est en ligne de façon à contrôler en continu la tension d'alimentation secteur et à appliquer en continu une tension de compensation par le biais du transformateur d'injection dans le but de réguler la tension d'alimentation.

31. Procédé de régulation du flux dans le noyau d'un transformateur d'injection de manière à éviter une saturation magnétique dans un conditionneur de tension triphasée active utilisant le transformateur d'injection pour appliquer une tension de compensation à une alimentation secteur en fonction de termes de compensation de tension en alpha et bêta calculés dans le référentiel fixe, le procédé comprenant les étapes consistant à :
recevoir les termes de compensation de tension en alpha et bêta ;
modéliser le flux dans le transformateur d'injection et générer des termes de flux en alpha et bêta en fonction des termes de compensation de tension en alpha ou bêta, respectivement, et d'un terme de constante de temps intrinsèque propre au transformateur d'injection, l'étape consistant à modéliser le flux dans le transformateur d'injection et générer des termes de flux en alpha et bêta comprenant les étapes consistant à : intégrer les termes de compensation de tension en alpha et bêta pour générer des termes de flux en alpha et bêta respectifs ; amplifier les termes de flux en alpha et bêta par le terme de constante de temps intrinsèque, le terme de constante de temps intrinsèque représentant la résistance effective du transformateur d'injection divisée par l'inductance d'aimantation du transformateur d'injection ; et réinjecter les termes de flux en bêta et alpha amplifiés dans leurs termes de compensation de tension en alpha et bêta respectifs par le biais d'une boucle de contre-réaction ;
appliquer une première modification aux termes de compensation de tension en alpha et bêta en fonction des termes de flux en alpha et bêta respectifs générés et d'un terme de constante de temps extrinsèque calculé de manière à réduire progressivement tout décalage de flux dans le transformateur d'injection, l'étape consistant à appliquer une première modification aux termes de compensation de tension en alpha et bêta comprenant les étapes consistant à : amplifier les termes de flux en alpha et bêta par le terme de constante de temps extrinsèque ; et réinjecter les termes de flux en alpha et bêta amplifiés dans leurs termes de compensation de tension en alpha et bêta respectifs par le biais d'une boucle de contre-réaction ;
calculer une représentation de niveau de flux maximal pour le transformateur d'injection en fonction des termes de flux en alpha et bêta et générer un terme limiteur en fonction d'une comparaison de la représentation de niveau de flux maximal calculée avec un seuil de flux positif préétabli ; et
appliquer une deuxième modification aux termes de compensation de tension en alpha et bêta en fonction des termes de flux en alpha et bêta respectifs générés et du terme limiteur généré pour empêcher la représentation de niveau de flux maximal dans le transformateur d'injection de dépasser le seuil de flux positif préétabli.

32. Procédé selon la revendication 31, dans lequel l'étape consistant à générer un terme limiteur en fonction d'une comparaison de la représentation de niveau de flux maximal calculée avec le seuil de flux positif préétabli comprend les étapes consistant à : générer un terme limiteur sensiblement nul si la représentation de niveau de flux maximal calculée s'inscrit dans la plage entre 0 et le seuil de flux positif préétabli ou, en variante, un terme limiteur non nul dont l'amplitude dépend de la quantité de laquelle la représentation de niveau de flux maximal calculée dépasse le seuil de flux positif ; et amplifier le terme limiteur par un scalaire préétabli.

33. Procédé selon la revendication 31 ou 32, dans lequel l'étape consistant à appliquer une deuxième modification aux termes de compensation de tension en alpha et bêta comprend les étapes consistant à : multiplier les termes de flux en alpha et bêta par le terme limiteur amplifié ; et réinjecter les termes de flux en alpha et bêta multipliés dans leurs termes de compensation de tension en alpha et bêta respectifs par le biais d'une boucle de contre-réaction.

34. Procédé selon l'une quelconque des revendications 31 à 33, dans lequel le conditionneur de tension active sert à conditionner une alimentation secteur triphasée.

35. Procédé selon l'une quelconque des revendications 31 à 34, dans lequel les bornes primaires du transformateur d'injection sont reliées à la sortie d'un onduleur triphasé, les termes de compensation de tension en alpha et bêta calculés dans le référentiel fixe étant utilisés pour générer des signaux modulés en largeur d'impulsion (PWM) correspondant destinés à attaquer l'onduleur pour générer les tensions de compensation appropriées destinées à être appliquées aux bornes primaires du transformateur d'injection.

36. Procédé selon l'une quelconque des revendications 31 à 35, dans lequel le conditionneur de tension active est en ligne de façon à contrôler en continu la tension d'alimentation secteur et à appliquer en continu une tension de compensation par le biais du transformateur d'injection dans le but de réguler la tension d'alimentation.
